(19) **Europäisches Patentamt / European Patent Office / Office européen des brevets**

(11) **EP 1 629 903 B1**

(12) **EUROPEAN PATENT SPECIFICATION**

(45) Date of publication and mention
of the grant of the patent:
**19.09.2007 Bulletin 2007/38**

(51) Int Cl.:
*B09B 3/00* (2006.01)   *B01D 1/02* (2006.01)
*B09B 5/00* (2006.01)   *G02F 1/13* (2006.01)

(21) Application number: **05254992.0**

(22) Date of filing: **11.08.2005**

(54) **Apparatus for extracting liquid crystal by heating under reduced pressure and method thereof**

Vorrichtung zur Extraktion von Flüssigkristall durch Erhitzen unter vermindertem Druck und zugehöriges Verfahren

Appareil pour l'extraction de cristal liquide par chauffage sous pression réduite et méthode associée

(84) Designated Contracting States:
**DE FI FR GB NL**

(30) Priority: **31.08.2004 JP 2004251494**

(43) Date of publication of application:
**01.03.2006 Bulletin 2006/09**

(73) Proprietor: **SEIKO EPSON CORPORATION**
**Shinjuku-ku**
**Tokyo 163-0811 (JP)**

(72) Inventor: **Yajima, Hiroyuki**
**Suwa-shi,**
**Nagano-ken 392-8502 (JP)**

(74) Representative: **Sturt, Clifford Mark et al**
**Miller Sturt Kenyon**
**9 John Street**
**London WC1N 2ES (GB)**

(56) References cited:
**DE-A1- 4 325 081**       **GB-A- 1 194 440**

• PATENT ABSTRACTS OF JAPAN vol. 2002, no. 12, 12 December 2002 (2002-12-12) & JP 2002 221728 A (ANELVA CORP), 9 August 2002 (2002-08-09)
• PATENT ABSTRACTS OF JAPAN vol. 2002, no. 09, 4 September 2002 (2002-09-04) & JP 2002 126688 A (SHARP CORP), 8 May 2002 (2002-05-08)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an apparatus for extracting liquid crystal by heating under reduced pressure, to a method thereof, and more particularly, to an apparatus and a method which can extract liquid crystal from liquid crystal panels to be disposed of from liquid crystal panel manufacturing factories or liquid crystal panels used in image display devices or information display devices disposed in marketplaces, by heating under reduced pressure.

Recently, as the amount of domestic waste and industrial waste has been increasing, there has been increasing demand for means for rendering the waste harmless, in order to suppress the increase in the amount of wastes and to prevent environmental pollution caused by the waste.

In order to meet the demand, efforts have been made to decrease the amount of waste by promoting recycling of industrial waste disposed of from factories and domestic waste such as electric home appliances, information devices or the like disposed of from homes and offices.

In this regard, for example, liquid crystal panels are used in electric home appliances and information devices. The number of such liquid crystal panels in use is expected to increase rapidly with the advancement of information technology society in terms of the development of devices with low power consumption and slim size.

Generally, a liquid crystal panel is structured in a manner such that liquid crystal mainly consisting of organic solvents is interposed between a pair of glass substrates on which transparent electrodes such as ITO (indium tin oxide) are deposited, and contacted surfaces of an outer periphery are sealed with an epoxy-based adhesive. Polarizing plates are attached to the outer surfaces of the glass substrates and organic materials such as a color filter and so on are disposed inside the glass substrates.

Apparatuses for recovering glass or rare metals from liquid crystal panels have already been disclosed. An apparatus and a method of processing waste liquid crystal panels in such a manner that a waste liquid crystal panel is placed in a reaction furnace without being broken, and subsequently heated in the reaction furnace under a pressure-reduced state; thus, liquid crystal which constitutes the waste liquid crystal panel and a portion of solid organic materials which are disposed on the inner and outer surfaces of the glass substrates are evaporated, and the remaining portion of the solid organic materials are carbonized has been proposed (for example, see Japanese Unexamined Patent Application Publication No. 2004-230229).

Also, it is conceivable to provide a method of recovering glass of a liquid crystal panel from a waste liquid crystal panel. The method is composed of the steps of carbonizing organic materials constituting the waste liquid crystal panel by disposing the waste liquid crystal panel in a heating furnace without breaking the waste liquid crystal panel, removing carbides from the glass of the liquid crystal panel, removing inorganic constituents from the glass of the liquid crystal panel by implementing a cleaning process using a strong acid solution, and removing the strong acid solution used in the process of removing the inorganic constituents from the glass of the liquid crystal panel.

However, in the above-described methods, when the waste liquid crystal panel is heated under a reduced pressure, it is difficult to raise the temperature of the inside of the furnace and the temperature of the liquid crystal panel being processed. In order to extract liquid crystal from the liquid crystal panel by heating under a reduced pressure which is similar to a vacuum condition, it is necessary to break (weaken) a resin portion, but the temperature for ensuring the breakage of the resin portion is higher than the temperature for extracting liquid crystal. That is to say, the temperature required for evaporating liquid crystal under a pressure-reduced state is 150°C, whereas a temperature required for weakening the resin portion is 200 to 800°C. Therefore, a temperature for implementing the reduced pressure heat treatment must be set to a temperature as high as from 200 to 800°C. Consequently, as the processing temperature is set to a high temperature in the range of 200 to 800°C, the evaporated liquid crystal is likely to be changed into harmful substances such as dioxins, PCB or the like, which is not preferable from the viewpoint of safety.

GB 1194440 discloses a process in which a volatile substance, e.g. a monomer and/or solvent, is removed from a polymer composition, or other mixture of viscous material and volatile substance, by injecting the mixture through a pipe and orifices to form strands in a vessel, maintained under sub-atmospheric pressure, wherein the strands impact the peaked roof of a hollow elongated heater and the material flows, in the form of a film, down hot walls. The volatile substance is vaporized from the strands with foaming. Residual volatile substance is vaporized from the film. Volatile substances are withdrawn from the vessel through an opening; and the devolatilized material flows out through an outlet. The mixture is heated under pressure before it is injected through the orifices into the vessel. Conduits are provided for circulating heating fluid through the heater, and through the jacket of the vessel. The strand-former is also provided with a heating- jacket.

An advantage of the invention is that it provides an apparatus for extracting liquid crystal by heating under reduced pressure which can easily raise the temperature of a waste liquid crystal panel and can lower the temperature of reduced pressure heat treatment to as low as the evaporation temperature of liquid crystal to efficiently recover liquid crystal with low energy consumption and a method thereof.

According to an aspect of the invention, there is provided an apparatus for extracting liquid crystal from a waste liquid crystal panel by heating under reduced pressure, comprising:

a chamber that has an inner wall and a heating unit, the inner wall defining an inner space adapted to accommodate waste liquid crystal panels, the heating unit heating the inner wall to heat the inner space;
a pressure-reducing unit that maintains the inner space under a pressure-reduced state ;
a tray adapted to receive waste liquid crystal panels, the tray including partitioned spaces capable of holding the waste liquid crystal panels; and
a heat conducting unit adapted to heat and thereby weaken an opening-sealing material or a sealing material of waste liquid crystal panels, the heat conducting unit being separate from the inner wall of the chamber;
wherein the heat conducting unit is a heat conductor which is connected to a heating source separate from a heating source of the heating unit that heats the inner wall of the chamber; and
wherein the heat conductor is a wire that extends on one side of the partitioned spaces of the tray.

According to the structure, when extracting liquid crystal from the waste liquid crystal panel placed in the chamber by heating under reduced pressure, a temperature raise in the waste liquid crystal panel for ensuring breakage (or weakening) of the waste liquid crystal panel can be easily implemented, and a reduced pressure heat treatment temperature can be lowered as low as an evaporation temperature of liquid crystal. As a result, the liquid crystal is unlikely to be changed into harmful substances and can be recovered in a reliable manner. In this aspect of the invention, as the waste liquid crystal panel is placed in the chamber to undergo a closed processing by heating under reduced pressure without the need of being broken, it is possible to safely recover liquid crystal.

According to the structure, not a heat conductor for transferring heat of the inner wall of the chamber generated by the heating unit constituting the chamber, but the heat conductor which is connected to the separate heating source capable of being independently controlled is provided. Therefore, since the opening-sealing material or sealing material of the waste liquid crystal panel can be directly heated and weakened, the surrounding temperature in the chamber can be lowered as low as an evaporation temperature of liquid crystal, by which it is possible to remove the possibility of the extracted liquid crystal to be changed into harmful substances.

Preferably, the heat conducting unit is formed into a rod-shape such that, when a plurality of waste liquid crystal panels are arranged, the heat conducting unit can be brought into contact with opening-sealing materials or sealing materials of the plurality of waste liquid crystal panels.

According to the structure, because the heat conducting unit is formed into the rod-shape, when heating and weakening the waste liquid crystal panel, the plurality of waste liquid crystal panels can be placed on the rod-shaped heat conducting unit to undergo the reduced pressure heat treatment.

Suitably, the heat conducting unit is formed into a rod-shape such that, when a plurality of waste liquid crystal panels are arranged, the heat conducting unit can be brought into contact with sealing materials of openings of the waste liquid crystal panels, and at least a portion of a sectional shape of the heat conducting unit can conform to an outer surface of the sealing material of each opening.

According to the structure, when weakening the sealing materials of the openings of the waste liquid crystal panels, since the heat conducting unit can conform to the outer surface of the sealing material of each opening, heat transfer to the sealing materials can be implemented in an efficient manner.

According to another aspect of the invention, there is provided a method of extracting liquid crystal from a waste liquid crystal panel by heating under reduced pressure, comprising:

disposing a waste liquid crystal panel in a chamber which has a heating unit that heats an inner space defined in the chamber by the medium of an inner wall of the chamber ; and
weakening an opening-sealing material or a sealing material of the waste liquid crystal panel using a heat conducting unit provided separately from the inner wall of the chamber, when heating the waste liquid crystal panel by the medium of the inner wall while maintaining the inner space in a pressure-reduced state.

According to the structure, when implementing reduced pressure heat treatment, a temperature raise in the waste liquid crystal panel can be easily implemented. Also, since a reduced pressure heat treatment temperature can be lowered as low as an evaporation temperature of liquid crystal, the liquid crystal is not changed into harmful substances and can be safely recovered.

The invention will be described with reference to the accompanying drawings, wherein like numbers reference like elements, and wherein:

FIG. 1 is a perspective view showing a chamber in an apparatus for extracting liquid crystal by heating under reduced pressure in accordance with a first embodiment of the invention;
FIG. 2 is a perspective view in which a tray and heater wires disposed in the chamber shown in FIG. 1 are partially broken-out;
FIG. 3 is an explanatory view showing a state in which an opening of a liquid crystal panel with an opening is heated by a heater wire to cause leakage of liquid crystal;

FIG. 4 is of cross-sectional views showing sectional shapes of the heater wire;

FIG. 5 is a view showing a portion which is likely to leak when an opening-sealing material shown in FIG. 3 is heated by the heater wire;

FIG. 6 is of views showing no-opening type liquid crystal panels in an apparatus for extracting liquid crystal by heating under reduced pressure in accordance with a second embodiment of the invention;

FIG. 7 is an explanatory view showing one of the processes for manufacturing the no-opening type liquid crystal panels shown in FIG. 6;

FIG. 8 is a longitudinal cross-sectional view showing a conventional liquid crystal panel;

FIG. 9 is of views showing an opened sealing type liquid crystal panel; and

FIG. 10 is a view schematically illustrating a construction of a system for processing liquid crystal of a waste liquid crystal panel according to the invention.

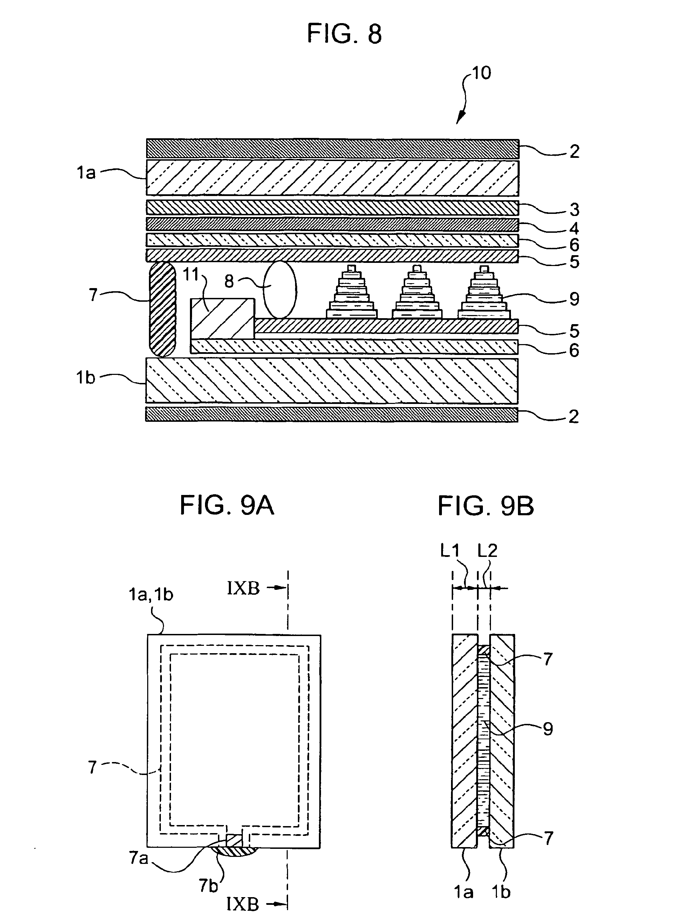

Hereafter, the embodiments of the invention will be described with reference to the accompanying drawings. First, a typical waste liquid crystal panel 10 to be processed according to the invention is illustrated in FIG. 8. The waste liquid crystal panel 10 is one discharged from a liquid crystal panel manufacturing factory or obtained from an image display device or information display device whose lifetime has come to an end. The waste liquid crystal panel 10 shown in FIG. 8 is an active type liquid crystal panel such as a TFT liquid crystal panel. Of course, it is to be readily understood that a passive type liquid crystal panel can also be appropriately processed according to the invention. The waste liquid crystal panel 10 has a pair of glass substrates 1a and 1b which are separated from each other by a predetermined distance. These glass substrates 1a and 1b are bonded to each other with a sealing material 7 such as an epoxy resin or the like which is applied along the peripheries of the glass substrates 1a and 1b between the inner surfaces thereof.

The glass substrates 1a and 1b are properly separated by the predetermined distance due to the presence of a spacer 8, and liquid crystal 9 consisting of organic solvents is filled in the space which is defined between the glass substrates 1a and 1b and is sealed by the sealing material 7, thereby forming a liquid crystal layer. Polarizing plates 2 are attached to the outer surfaces of the glass substrates 1a and 1b with an adhesive. In one glass substrate 1a, a polarizing plate 2 is disposed on the outer surface, and a color filter 3, an overcoat 4 formed with a transparent conductive layer 6, and an alignment layer 5 are disposed on the inner surface. In the other glass substrate 1b, a polarizing plate 2 is disposed on the outer surface, and a transparent thin conductive film 6 and an alignment layer 5 are disposed on the inner surface.

The polarizing plates 2, the color filter 3 and the alignment layers 5 are formed of materials containing an organic material as a main constituent, and the transparent thin conductive film 6 is formed of a film containing an indium constituent or the like. The reference numeral 11 designates a switching element which is made of metal.

FIG. 9A shows the pair of glass substrates 1a and 1b, the sealing material 7 for holding the liquid crystal 9 between the glass substrates 1a and 1b, and an opening-sealing material 7b for sealing an opening 7a defined in the sealing material 7, which constitute the main part of the waste liquid crystal panel 10 shown in FIG. 8. FIG. 9B is a cross-sectional view taken along the line IXB-IXB of FIG. 9A, in which L1 = 0.5 mm and L2 = 5 to 10 $\mu$m.

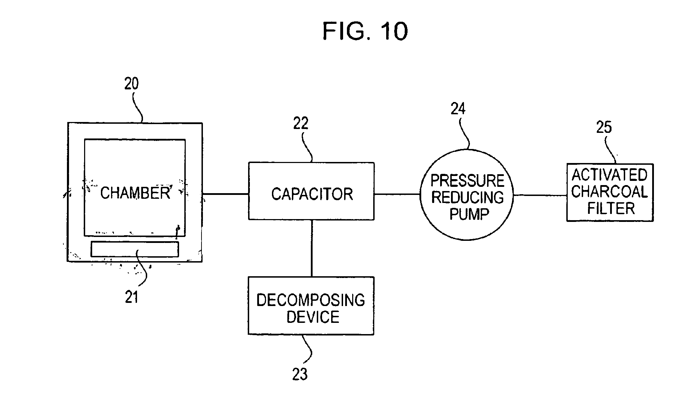

FIG. 10 is a view schematically illustrating construction of a system for processing liquid crystal of a waste liquid crystal panel according to the invention. The system includes a chamber 20, a pressure-reducing pump 24, a capacitor 22, a decomposing device 23 and an activated charcoal filter 25. The chamber 20 defines an inner space in which the waste liquid crystal panel 10 is disposed and has a heating unit 21 for heating the inner space. The pressure-reducing pump 24 is provided at the discharge side of the chamber 20 and serves as the pressure-reducing means for reducing the pressure in the chamber 20. The capacitor 22 is disposed between the chamber 20 and the pressure-reducing pump 24. The capacitor 22 condenses the liquid crystal which is evaporated and thereby extracted by heating under reduced pressure of the waste liquid crystal panel 10 in the chamber 20 to recover the liquid crystal from other gases. The decomposing device 23 decomposes the liquid crystal condensed and separated by the capacitor 22 to make the liquid crystal harmless. The activated charcoal filter 25 cleans the remaining gas after the liquid crystal is separated from other gases, and then discharges the gas.

First Embodiment

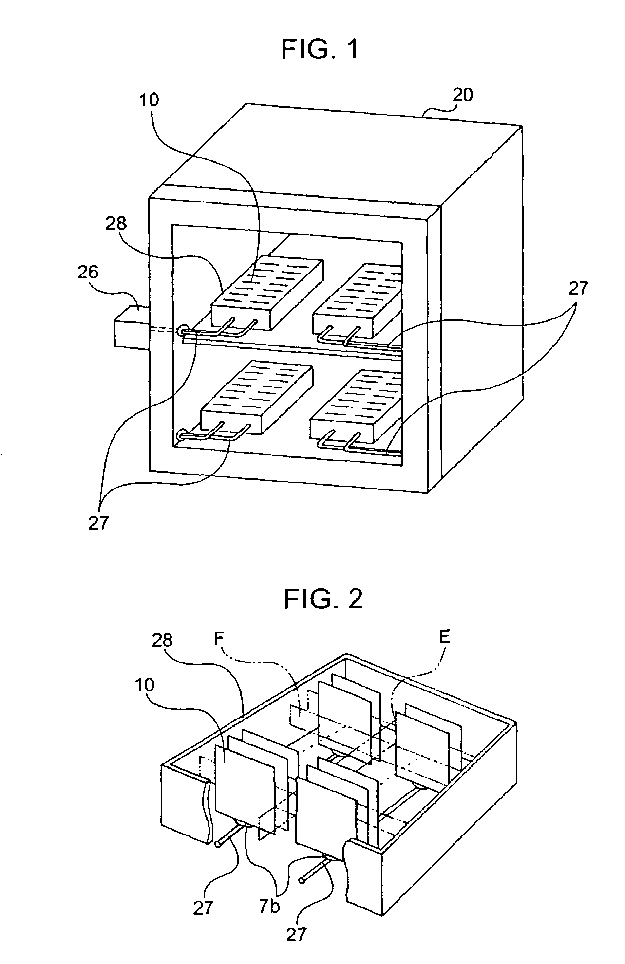

FIG. 1 is a perspective view showing the chamber in an apparatus for extracting liquid crystal by heating under reduced pressure in accordance with a first embodiment of the invention, and FIG. 2 is a perspective view in which a tray and heater wires disposed in the chamber shown in FIG. 1 are shown in a partially cutaway fashion.

FIG. 1 shows the outer appearance of the chamber 20 in which the reduced pressure heat treatment is implemented, in the apparatus for extracting liquid crystal from the waste liquid crystal panels 10 by heating under reduced pressure. The chamber 20 has a heating unit (not shown but indicated by the reference numeral 21 in FIG. 10) which serves as heating means for evaporating the liquid crystal from waste liquid crystal panels 10 placed in the inner space of the chamber 20. With the chamber 20 maintained in a pressure-reduced state by using the pressure-reducing pump as pressure-reducing means, the chamber 20 heats the waste liquid crystal panels 10. A tray 28 for holding the plurality of waste liquid crystal panels 10 and the heater wires 27 which serve as heat conducting means for locally heating the opening-sealing material or the sealing material of each waste liquid crystal panel 10 are disposed in the chamber 20.

The inner wall defining the inner space of the chamber 20 is made of a metallic material which has an excellent heat conductivity. The inner wall is heated by the heating unit (indicated by the reference numeral 21 in FIG. 10) which is disposed in the inner wall of the chamber 20, to serve as a main heating source for evaporating the liquid crystal of the waste liquid crystal panels 10. Accordingly, the inner wall of the chamber is maintained at a temperature appropriate for the reduced pressure heat treatment. The inner space of the chamber 20 in which the reduced pressure heat treatment is implemented is reduced in pressure to a value in the range of 0.01 to 10 Kpa. While a processing temperature will be described later, in the embodiment of the invention, the processing temperature can be set at about 150°C which corresponds to the evaporation temperature of the liquid crystal.

The chamber 20 substantially has a box shape such as a rectangular parallelepiped or a regular hexahedron. A cover which can be opened and tightly closed is provided on the front surface of the chamber 20. A heat-resistant glass is provided to the cover so that the inner space of the chamber 20 can be observed. The inner space of the chamber 20 is divided, for example, into two upper and lower compartments. At least one tray 28 capable of holding a predetermined number of waste liquid crystal panels 10 can be disposed in each compartment. The tray 28 is formed of an insulating material having heat resistance and has the shape of a frame or a basket.

FIG. 2 shows the tray 28 for receiving the waste liquid crystal panels 10 and a structure which is disposed in the tray 28 to bring the opening 7a of the waste liquid crystal panels 10 into contact with the heater wires 27 which are heat conductors.

Inside the tray 28, as shown by the two-dot chain lines E and F in FIG. 2, partitioning plates or partitioning line members are arranged in the longitudinal and transverse directions to hold the waste liquid crystal panels 10 apart from one another. The heater wires 27 serving as the heat conducting means are arranged parallel to each other below the tray 28. Both ends of each heater wire 27 pass through the inner wall of the chamber 20 and are connected to a separate heating source 26 which is provided outside the chamber 20 and is different from the heating unit.

The tray 28 is formed of an insulating material having a heat resistance. The tray 28 has a structure capable of holding the heater wires 27 inside the chamber. Both ends of the each heater wire 27 pass through one side of the wall of the tray 28 to be connected to the separate heating source 26 which is provided outside (or inside) the chamber 20 and is different from the heating unit. The set of the tray 28 and the heater wires 27 may be fixedly disposed in the chamber 20, or the heater wires 27 may be detachably integrated with the tray 28 by providing connector means on the inner wall of the chamber 20. When the tray 28 and the heater wires 27 are detachably constructed, workability can be improved when disposing the plurality of waste liquid crystal panels 10 in the tray 28.

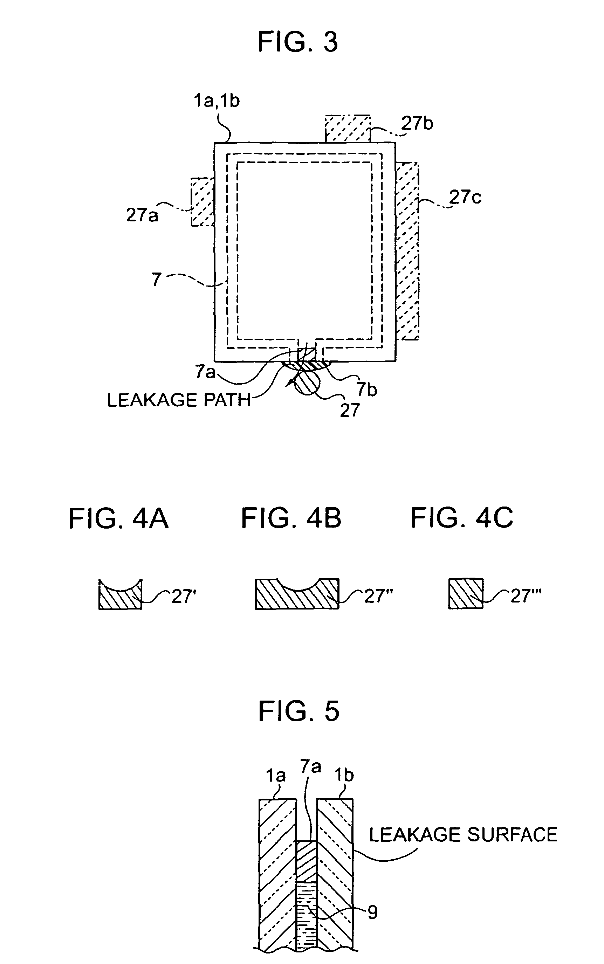

When disposing the waste liquid crystal panels 10 one by one into the partitioned spaces of the tray 28 which has the frame or basket-shaped configuration, each waste liquid crystal panel 10 is inserted into each partitioned space with the opening-sealing material 7b of the opening 7a (see FIG. 3 or FIG. 9) of the waste liquid crystal panel 10 facing downward, so that the opening-sealing material 7b of the waste liquid crystal panel 10 can be brought into contact with the outer peripheral surface of the heater wire 27 which is disposed below the tray 28. The opening-sealing material 7b is made of resin such as acryl resin, and due to this fact, the opening-sealing material 7b has a decomposition temperature which is lower than that of the sealing material 7 formed of epoxy resin or the like.

As heat needed for heating is transferred to the heater wires 27 through any heating source (the main heating source 21 or the separate heating source 26), heat is directly transferred to the opening-sealing materials 7b of the opening 7a of the waste liquid crystal panels 10 respectively placed in the partitioned spaces, whereby the opening-sealing materials 7b are heated. The heater wire 27 may be formed of a wire rod which has a high electric resistance so that a current can flow through the wire rod for the purpose of heating the waste liquid crystal panel 10.

By heating only the sealed part of the waste liquid crystal panel 10, the sealing resin is weakened and cracks are formed in the sealing resin. As a consequence, leakage paths are formed in the sealed portion as shown in FIG. 3, and the liquid crystal can be evaporated into the inner space of the chamber 20 through the leakage paths. The liquid crystal evaporated into the inner space of the chamber 20 is condensed and separated by the capacitor 22 shown in FIG. 10 and then supplied to the decomposing device 23.

FIG. 3 shows a state in which the sealed portion of the liquid crystal panel having the opening shown in Fig. 9 is heated by the heater wire 27. Since the sealed portion is heated with the heater wire 27 brought into contact only with the opening-sealing material 7b, the temperature of the inner space of the chamber 20 is not significantly increased and corresponds to the evaporation temperature of the liquid crystal. That is to say, by forming cracks (causing leakage) in the sealed portion of the waste liquid crystal panel 10 through local heating using the heater wire 27, the liquid crystal filled between the glass substrates 1a and 1b can be evaporated through the leakage paths.

FIG. 4 shows various sectional shapes of the heater wire for heating the opening-sealing material 7b. FIG. 4A shows a sectional shape of the heater wire 27' which has on the upper surface thereof a curved portion to conform to the middle portion of the opening-sealing material 7b having a curved contour. FIG. 4B shows a sectional shape of the heater wire 27" which has on the upper surface thereof a curved portion and plane portions formed at both sides of the curved portion to conform to the entire portion of the opening-sealing material 7b having a curved contour and to extend slightly beyond both widthwise ends of the curved opening-sealing material 7b to thereby be brought into partial contact with the glass substrates. FIG. 4C shows a sectional shape of the heater wire 27''' which is rectangular or square and has a plane upper surface. All these heater wires are formed to extend in the shape of a rail so as to simultaneously heat the plurality of waste liquid crystal panels.

Next, the workings of the first embodiment of the invention will be described.

When assuming that the temperature of the inner wall of the chamber 20 is T1, the evaporation temperature of the liquid crystal is T0(=150°C), a heating temperature of the heater wire 27 is T2 and a decomposition temperature of the opening-sealing material 7b under a pressure-reduced state is T3, the following relation is established:

$$T2 > T3 > T0. \qquad (1)$$

Also, it is preferred that the relation of T1 = T0 be established.

As a method of increasing the temperature of the heater wire 27, the following A and B can be considered.

(A) A heating source for the heater wires 27 serving as heat conductors is gained from the main heating source, that is, the inner wall of the chamber 20 which is heated by the heating unit 21. In this case, the heating temperature T2 of the heater wires 27 is equal to the temperature T1 of the inner wall of the chamber 20, thereby falling under the relation T2=T1. Thus, as can be readily understood from the above relation (1), since the temperature T1 (which is equal to the heating temperature T2 of the heater wires 27) of the inner wall of the chamber 20 which is heated by the heating unit (indicated by the reference numeral 21 in FIG. 10) must be set to a temperature higher than the decomposition temperature T3 (for example, 180°C) of the opening-sealing material 7b including acryl resin, that is, in the range of 200 to 800°C, when the opening-sealing material 7b is broken and the liquid crystal is evaporated, the liquid crystal is likely to be changed into harmful substances, which is not preferable from the viewpoint of recycling and safety.

(B) A heating source for the heater wires 27 serving as heat conductors is gained from the separate heating source 26. In this case, the relation falls under T2 ≠ T1. Thus, since the heating temperature T2 of the heater wires 27 is not related to the temperature T1 of the inner wall of the chamber 20, the heating temperature T2 of the heater wires 27 can be controlled by the separate heating source 26 independently of the heating unit (indicated by the reference numeral 21 in FIG. 10) which heats the inner space of the chamber 20. Accordingly, the relation T2 > T3 > T0 and the relation T1=T0 can be satisfied. As a result, it is possible to set the temperatures as T0=150°C, T3 = 180°C and 200°C ≤ T2 ≤ 800°C, and the temperature T1 of the inner wall of the chamber 20 which is heated by the main heating source can be set to satisfy the relation T1 = T0(= 150°C). In other words, it is possible to set the processing temperature T1 in the inner space of the chamber 20 to a temperature (150°C corresponding to the evaporation temperature of the liquid crystal) which is lower than the range of 200 to 800°C set in the above method (A). Therefore, it is possible to extract the liquid crystal without changing it into harmful substances (such as dioxins and PCB).

Accordingly, in the invention, as a method of raising the temperature of the heater wires 27, the method (B) is adopted.

While it was described above that the opening-sealing material 7b of the sealed portion of the waste liquid crystal panel 10 is locally heated by the heater wire 27 to be broken (weakened), the invention is not limited to this case in which the sealed portion is necessarily broken (weakened). Thus, the invention may be constructed in such a manner that the sealing material 7 is heated by a heat conductor (as shown by the two-dot chain line) 27a, 27b or 27c which is disposed around the periphery of the waste liquid crystal panel 10, to be broken or weakened as shown in FIG. 3. Since the sealing material 7 is generally formed of epoxy-based resin, when assuming that the decomposition temperature of the sealing material 7 in the pressure-reduced state is T3', the relationship between T3' and the decomposition temperature T3 of the opening-sealing material 7b in the pressure-reduced state is expressed by T3'>T3. Therefore, the heating temperature T2 of the heater wires 27 by the separate heating source 26 is set to be higher than the decomposition temperature T3' of the opening-sealing material 7, to be expressed by T2 > T3'. Even in this case, the relation T2 > T3' > T0 and the relation T1=T0 can be satisfied.

In the case that, as shown in FIG. 3, the sealing material 7 is heated by the heat conductor (as shown by the two-dot chain line) 27a, 27b or 27c which is disposed around the periphery of the waste liquid crystal panel 10, to be broken or weakened, as can be readily seen from FIG. 5, for example, the interface between the glass substrate 1b and the sealing material 7 serves as a leakage surface, from which the leakage path of the liquid crystal 9 is formed.

According to the first embodiment of the invention, the temperature of the waste liquid crystal panel can be easily raised, and a processing temperature can be lowered. Also, due to the closed processing in which the waste liquid crystal panel is placed in the chamber 20 without being broken to undergo reduced pressure heat treatment, it is possible to safely extract the liquid crystal.

Second Embodiment

The above description set forth with reference to FIGs. 1 to 5 in accordance with the first embodiment of the invention falls under an opened sealing type liquid crystal panel in which the waste liquid crystal panel 10 has the opening 7a and the heater wire 27 is brought into contact with the opening-sealing material 7b sealing the opening 7a to heat the opening-sealing material 7b.

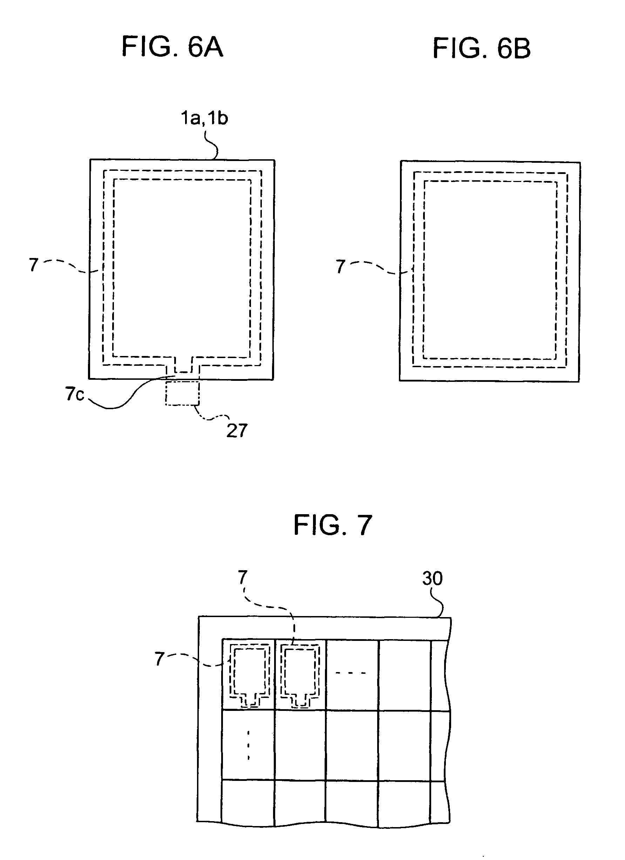

However, the waste liquid crystal panels 10 may be no-opening type liquid crystal panels which do not have openings. In this type of liquid crystal panel, as shown in FIG. 6B, the sealing material 7 is applied in the shape of a closed loop onto one glass substrate 1a of the two glass substrates at a position which is separated from the periphery of the glass substrate by a predetermined distance, and then, an appropriate amount of liquid crystal 9 is dropped onto the space surrounded by the sealing material 7 using a dispenser (not shown). In this state, the other glass substrate 1b is placed on the one glass substrate 1a so that the one and the other glass substrates are bonded to each other by the sealing material 7. Therefore, in the no-opening type liquid crystal panels, the opening which is sealed by the opening-sealing material 7b as shown in FIGs. 3 and 9 does not exist.

In this consideration, in this second embodiment of the invention, in order to easily extract the liquid crystal from the no-opening type waste liquid crystal panel, at least a portion of the patterned shape of the sealing material 7 is applied to be more adjacent to the periphery of the waste liquid crystal panel as shown in FIG. 6A when compared with the conventional patterned shape of the sealing material 7 as shown in FIG. 6B.

Namely, while the sealing material 7 is applied to the liquid crystal panel in the shape of a frame to seal the liquid crystal, at least a portion (indicated by the reference numeral 7c) of the sealing material 7 is applied to project toward the peripheries of the two glass substrates 1a and 1b which constitute the liquid crystal panel. By means of this construction, in the patterned shape of the sealing material 7 of the waste liquid crystal panel shown in FIG. 6A, a heater wire 27 (shown by the two-dot chain line) can be brought into contact with the outer surface of the projecting portion 7c to locally heat and break (weaken) the projecting portion 7c, so that the liquid crystal filled in the space between the glass substrates 1a and 1b can be extracted into the inner space of the chamber in which the reduced pressure heat treatment is implemented. A plurality of projecting portions 7c may be formed in the sealing material 7.

FIG. 7 is an explanatory view showing one of the processes for manufacturing the no-opening type liquid crystal panels shown in FIG. 6A. When manufacturing a plurality of no-opening type liquid crystal panels, two large-sized glass substrates are prepared, the sealing material 7 is applied onto one large-sized glass substrate to form a plurality of sealing patterns each having the projecting portion 7c so that the sealing patterns are arranged in longitudinal and transverse directions in correspondence to a plurality of liquid crystal panels to be manufactured. Then, the other large-sized glass substrate is bonded to the one large-sized glass substrate to obtain a mother substrate 30. Thereafter, the mother substrate 30 is cut into the plurality of liquid crystal panels using a dicing device.

Even in the second embodiment of the invention, similarly to the first embodiment, since the liquid crystal can be extracted by locally breaking (weakening) a portion of the waste liquid crystal panel, in a state in which the temperature of the inner wall of the chamber, that is, the temperature governing the inner space of the chamber can be suppressed to about 150°C capable of evaporating the liquid crystal, the liquid crystal can be extracted. Accordingly, the possibility of the liquid crystal being changed into harmful substances (such as dioxins and PCB) is eliminated, and the liquid crystal can be extracted without being changed into the harmful substances.

According to this second embodiment of the invention, even in the case of the no-opening type waste liquid crystal panel, due to the closed processing in which the waste liquid crystal panel is placed in the chamber 20 without being broken to undergo reduced pressure heat treatment, it is possible to safely extract the liquid crystal.

As apparent from the above description, according to the invention, advantages are provided in that, regardless of whether a product adopts an opened sealing type liquid crystal panels or a no-opening type liquid crystal panels, liquid crystal can be extracted while preventing generation of harmful substances. Therefore, safety and reliability are improved when extracting liquid crystal. Further, the liquid crystal can be made harmless, and a processing system having a high grade of safety can be realized.

**Claims**

1. An apparatus for extracting liquid crystal from a waste liquid crystal panel by heating under reduced pressure, comprising:

   a chamber (20) that has an inner wall and a heating unit (21), the inner wall defining an inner space adapted to accommodate waste liquid crystal panels, the heating unit (21) heating the inner wall to heat the inner space;

a pressure-reducing unit (24) that maintains the inner space under a pressure-reduced state;

at least a tray (28) adapted to receive waste liquid crystal panels, the tray (28) including partitioned spaces capable of holding the waste liquid crystal panels; and

a heat conducting unit (27) adapted to heat and thereby weaken an opening-sealing material or a sealing material of waste liquid crystal panels, the heat conducting unit being separate from the inner wall of the chamber (20);

wherein the heat conducting unit (27) is a heat conductor which is connected to a heating source (26) separate from a heating source of the heating unit (21) that heats the inner wall of the chamber (20); and

wherein the heat conductor is a wire that extends on one side of the partitioned spaces of the tray (28).

2. The apparatus for extracting liquid crystal by heating under reduced pressure according to Claim 1, wherein, when a plurality of waste liquid crystal panels are arranged in the tray (28), the heat conducting unit (27) is adapted to be brought into contact with opening-sealing materials or sealing materials of the plurality of waste liquid crystal panels.

3. The apparatus for extracting liquid crystal by heating under reduced pressure according to Claim 1, wherein, when a plurality of waste liquid crystal panels are arranged in the tray (28), the heat conducting unit (27) is adapted to be brought into contact with sealing materials of openings of the waste liquid crystal panels, and at least a portion of a sectional shape of the heat conducting unit (27) conforms to an outer surface of the sealing material of each opening.

4. A method of extracting liquid crystal from a waste liquid crystal panel by heating under reduced pressure, comprising:

disposing a waste liquid crystal panel in a chamber (20) of an apparatus according to any of the preceding claims, said chamber (20) having a heating unit (21) that heats an inner space defined in the chamber (20) by the medium of an inner wall of the chamber (20); and

weakening an opening-sealing material or a sealing material of the waste liquid crystal panel using a heat conducting unit (27) provided separately from the inner wall of the chamber (20), when heating the waste liquid crystal panel by the medium of the inner wall while maintaining the inner space in a pressure-reduced state.

**Patentansprüche**

1. Vorrichtung zur Extraktion von Flüssigkristall aus einer verbrauchten Flüssigkristallplatte durch Erhitzen unter vermindertem Druck, umfassend:

eine Kammer (20), die eine Innenwand und eine Heizeinheit (21) aufweist, wobei die Innenwand einen Innenraum definiert, der dazu ausgebildet ist, verbrauchte Flüssigkristallplatten aufzunehmen, wobei die Heizeinheit (21) die Innenwand erhitzt, um den Innenraum zu erhitzen;

eine Druckverminderungseinheit (24), die den Innenraum in einem druckvermindertem Zustand hält;

mindestens eine Schale (28), die dazu ausgebildet ist, verbrauchte Flüssigkristallplatten aufzunehmen, wobei die Schale (28) getrennte Räume enthält, die imstande sind, die verbrauchten Flüssigkristallplatten zu halten; und

eine Wärmeleiteinheit (27), die dazu ausgebildet ist, ein Öffnungsdichtungsmaterial oder ein Dichtungsmaterial verbrauchter Flüssigkristallplatten zu erhitzen und **dadurch** zu erweichen, wobei die Wärmeleiteinheit von der Innenwand der Kammer (20) getrennt ist;

wobei die Wärmeleiteinheit (27) ein Wärmeleiter ist, der an eine Heizquelle (26) separat von einer Heizquelle der Heizeinheit (21) angeschlossen ist, die die Innenwand der Kammer (20) erhitzt; und

wobei der Wärmeleiter ein Draht ist, der an einer Seite der getrennten Räume der Schale (28) verläuft.

2. Vorrichtung zur Extraktion von Flüssigkristall durch Erhitzen unter vermindertem Druck nach Anspruch 1, wobei, wenn mehrere verbrauchte Flüssigkristallplatten in der Schale (28) angeordnet sind, die Wärmeleiteinheit (27) dazu ausgebildet ist, mit den Öffnungsdichtungsmaterialien oder Dichtungsmaterialien der mehreren verbrauchten Flüssigkristallplatten in Kontakt gebracht zu werden.

3. Vorrichtung zur Extraktion von Flüssigkristall durch Erhitzen unter vermindertem Druck nach Anspruch 1, wobei, wenn mehrere verbrauchte Flüssigkristallplatten in der Schale (28) angeordnet sind, die Wärmeleiteinheit (27) dazu ausgebildet ist, mit Dichtungsmaterialien von Öffnungen der verbrauchten Flüssigkristallplatten in Kontakt gebracht zu werden, und mindestens ein Abschnitt einer Profilform der Wärmeleiteinheit (27) sich an eine äußere Oberfläche des Dichtungsmaterials jeder Öffnung anpasst.

4. Verfahren zur Extraktion von Flüssigkristall aus einer verbrauchten Flüssigkristallplatte durch Erhitzen unter vermindertem Druck, umfassend:

Anordnen einer verbrauchten Flüssigkristallplatte in einer Kammer (20) einer Vorrichtung nach einem der vorangehenden Ansprüche, wobei die Kammer (20) eine Heizeinheit (21) aufweist, die einen Innenraum, der in der Kammer (20) definiert ist, über eine Innenwand der Kammer (20) erhitzt; und
Erweichen eines Öffnungsdichtungsmaterials oder eines Dichtungsmaterials der verbrauchten Flüssigkristallplatte unter Verwendung einer Wärmeleiteinheit (27), die separat von der Innenwand der Kammer (20) bereitgestellt ist, wenn die verbrauchte Flüssigkristallplatte über die Innenwand erhitzt wird, während der Innenraum in einem druckvermindertem Zustand gehalten wird.

**Revendications**

1. Appareil pour extraire des cristaux liquides d'un panneau à cristaux liquides rebut en chauffant sous pression réduite, comprenant :

une chambre (20) possédant une paroi interne et une unité de chauffage (21), la paroi interne définissant un espace interne adapté pour s'adapter à des.panneaux à cristaux liquides rebuts, l'unité de chauffage (21) chauffant la paroi interne afin de chauffer l'espace interne ;
une unité de réduction de pression (24) qui maintient l'espace interne dans un état de pression réduite ;
au moins un bac (28) adapté pour recevoir les panneaux à cristaux liquides rebuts, le bac (28) comprenant des espaces partagés capables de contenir les panneaux à cristaux liquides rebuts ; et
une unité de conduction de chaleur (27) adaptée pour chauffer, et se faisant dégrader, une matière de scellement d'ouverture ou une matière de scellement de panneaux à cristaux liquides rebuts, l'unité de conduction de chaleur étant séparée de la paroi interne de la chambre (20) ;
l'unité de conduction de chaleur (27) étant un conducteur de chaleur connecté à une source de chauffage (26) séparée d'une source de chauffage de l'unité de chauffage (21) qui chauffe la paroi interne de la chambre (20); et
le conducteur de chaleur étant un filament qui s'étend d'un côté des espaces partagés du bac (28).

2. Appareil pour extraire des cristaux liquides en chauffant sous pression réduite selon la revendication 1, avec lequel, lorsqu'une pluralité de panneaux à cristaux liquides rebuts sont disposés dans le bac (28), l'unité de conduction de chaleur (27) est adaptée pour être mise en contact avec les matières de scellement d'ouverture ou les matières de scellement de la pluralité de panneaux à cristaux liquides rebuts.

3. Appareil pour extraire des cristaux liquides en chauffant sous pression réduite selon la revendication 1, avec lequel, lorsqu'une pluralité de panneaux à cristaux liquides rebuts sont disposés dans le bac (28), l'unité de conduction de chaleur (27) est adaptée pour être mise en contact avec les matières de scellement des ouvertures des panneaux à cristaux liquides rebuts, et au moins une partie d'une forme en coupe de l'unité de conduction de chaleur (27) pouvant s'adapter à une surface externe de la matière de scellement de chaque ouverture.

4. Procédé d'extraction de cristaux liquides d'un panneau à cristaux liquides rebut en chauffant sous pression réduite, comprenant :

la mise en place d'un panneau à cristaux liquides rebut dans une chambre (20) d'un appareil selon l'une quelconque des revendications précédentes, ladite chambre (20) possédant une unité de chauffage (21) qui chauffe un espace interne définit dans la chambre (20) au moyen d'une paroi interne de la chambre (20); et
la dégradation d'une matière de scellement d'ouverture ou d'une matière de scellement du panneau à cristaux liquides rebut en utilisant une unité de conduction de chaleur (27) fournie séparément de la paroi interne de la chambre (20), lors de l'échauffement du panneau à cristaux liquides au moyen de la paroi interne tout en maintenant l'espace interne dans un état de pression réduite.

# FIG. 1

# FIG. 2

## FIG. 3

1a,1b

27b

27a

27c

7

7a

LEAKAGE PATH

7b

27

## FIG. 4A    FIG. 4B    FIG. 4C

27'

27"

27'''

## FIG. 5

1a    7a    1b

LEAKAGE SURFACE

9

## FIG. 6A

## FIG. 6B

1a,1b

7

7c

27

7

## FIG. 7

7

30

7

# FIG. 8

# FIG. 9A

# FIG. 9B

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004230229 A

- GB 1194440 A